# FASCICULE DE BREVET EUROPEEN

(11) **EP 2 602 628 B1**
(45) Date de publication et mention de la délivrance du brevet: **26.11.2014**
(21) Numéro de dépôt: 12196010.8
(22) Date de dépôt: 07.12.2012
(51) Int. Cl.: G01P 5/165

(54) **Sonde de mesure de pression totale d'un ecoulement et procede de mise en oeuvre de la sonde**
Messsonde zum Messen des Gesamtdrucks einer Strömung, und Verfahren zur Inbetriebnahme dieser Sonde
Probe for measuring the total pressure of a flow and method for implementing the probe

(30) Priorité: 09.12.2011 FR 1103779
(43) Date de publication de la demande: 12.06.2013
(73) Titulaire: Thales, 92200 Neuilly Sur Seine (FR)
(72) Inventeur: Leblond, Henri, 78000 Versailles (FR); Jaulain, Yves, 86140 Scorbe Clairvaux (FR); Pineau, Jean-Philippe, 41190 Landes Le Gaulois (FR)
(74) Mandataire: Collet, Alain

(56) Documents cités:
- EP-A2- 1 997 731
- GB-A- 502 060
- GB-A- 867 675
- US-A- 4 680 962

## Description

L'invention concerne une sonde de mesure de pression totale d'un écoulement et un procédé de mise en oeuvre de la sonde.

Le pilotage de tout aéronef nécessite de connaître sa vitesse relative par rapport à l'air, c'est-à-dire au vent relatif. Cette vitesse est déterminée à l'aide de sondes de mesure de la pression statique Ps et de la pression totale Pt, ainsi que de capteurs de mesure de l'angle d'incidence α et de l'angle de dérapage β, α et β fournissent la direction du vecteur de vitesse dans un système de référence, ou référentiel, lié à l'aéronef et Pt - Ps fournit le module de ce vecteur vitesse. Les quatre paramètres aérodynamiques permettent donc de déterminer le vecteur vitesse de tout aéronef, tel que par exemple un avion ou un hélicoptère.

La mesure de la pression totale Pt se fait habituellement à l'aide d'un tube dit de Pitot. Il s'agit d'un tube ouvert à l'une de ses extrémités et obstrué à l'autre. L'extrémité ouverte du tube fait sensiblement face à l'écoulement.

Le filet d'air situé en amont du tube est progressivement ralenti jusqu'à atteindre une vitesse quasi nulle à l'entrée du tube. Le ralentissement de la vitesse de l'air augmente la pression de l'air. Cette pression augmentée forme la pression totale Pt de l'écoulement d'air. A l'intérieur du tube de Pitot, on mesure la pression d'air qui y règne.

Pour pouvoir fonctionner en conditions humides ou de givrage, ce tube de Pitot est réchauffé électriquement. Le réchauffage évite que le tube ne soit obstrué par de la glace, lors de vols en conditions givrantes. Ce tube est muni d'un ou plusieurs trous de purge et pièges à eau, pour éviter tout risque d'ingestion d'eau dans la canalisation de pression totale, en cas de vol dans une atmosphère chargée d'eau, (traversée de nuages, conditions pluvieuses etc...). Les trous de purge permettent d'évacuer l'eau liquide ayant pénétré dans le tube de Pitot.

Le fonctionnement nominal du tube Pitot implique un réchauffage pour éviter l'accumulation de glace et pour éviter que les trous de purges ne soient bouchés totalement ou partiellement, ce qui nuirait à leur rôle d'évacuation de l'eau pénétrant en vol ou au sol.

Pour les aéronefs actuels la vérification du bon fonctionnement du réchauffage est principalement obtenue par la surveillance du courant électrique consommé par chaque sonde. En effet, le réchauffage est généralement réalisé au moyen d'un élément résistif noyé dans le corps de la sonde et dont la résistivité évolue avec la température. On peut choisir un élément résistif dont la résistance augmente avec la température. En conséquence, si le courant consommé par l'élément résistif est supérieur à une certaine valeur, alors la sonde est considérée valide, sinon l'information de pression qu'elle délivre n'est pas prise en compte et la sonde est considérée comme défaillante. On fournit aux moyens de réchauffage une puissance électrique importante en vol, alors que cela n'est pas toujours nécessaire.

L'invention vise à ajuster au mieux la consommation électrique d'un tube de Pitot en condition givrante. Ce but est atteint en contrôlant plus spécifiquement la température locale d'une partie du tube de Pitot afin d'ajuster la puissance de réchauffage de cette partie du tube de Pitot en fonction de la température qui y est mesurée.

A cet effet, l'invention a pour objet une sonde de mesure de pression totale d'un écoulement, la sonde étant destinée à équiper un aéronef, la sonde comprenant un tube de Pitot, des moyens de détermination d'une température moyenne de la sonde et des moyens de réchauffage de l'ensemble de la sonde pilotés par les moyens de détermination de la température moyenne de la sonde, **caractérisée en ce qu'**elle comprend en outre des moyens de détermination d'une température locale de zones du tube de Pitot susceptibles d'accumuler des particules véhiculées par l'écoulement indépendamment des moyens de détermination de la température moyenne de la sonde.

L'invention a également pour objet un procédé selon lequel si la température locale délivrée par les moyens de mesure d'une température locale des zones du tube de Pitot susceptibles d'accumuler des particules véhiculées par l'écoulement est inférieure à la première température de référence, alors on enclenche le réchauffage complémentaire de zones du tube de Pitot susceptibles d'accumuler des particules véhiculées par l'écoulement jusqu'à atteindre une température délivrée au moins égale à une seconde température de référence supérieure à la première température de référence.

La sonde comprend généralement une résistance chauffante permettant le réchauffage globale de l'ensemble de la sonde. Dans certaines sondes, la température moyenne n'est pas mesurée et la puissance de réchauffage est en permanence maximale. Avantageusement, la sonde peut comprendre des moyens pour déterminer sa température moyenne. A cet effet la résistance peut être réalisée dans un matériau dont la résistivité varie en fonction de sa température. Lors de son utilisation, on peut mesurer la valeur de la résistance 22 et ainsi déterminer une température moyenne de la sonde 10.

Que la température moyenne de la sonde soit mesurée ou non, la mesure de température locale des zones du tube de Pitot susceptibles d'accumuler des particules véhiculées par l'écoulement est indépendante de la température moyenne de la sonde. En effet, même si l'action de la résistance chauffante, permettant le réchauffage globale de l'ensemble de la sonde, permet aussi de faire varier la température des zones du tube de Pitot susceptibles d'accumuler des particules véhiculées par l'écoulement, des facteurs extérieurs à la sonde 10 peuvent faire varier ces deux températures séparément l'une de l'autre. L'objet de l'invention est précisément de distinguer ces deux températures afin d'adapter au mieux la consommation électrique des moyens de réchauffage de la sonde.

L'invention sera mieux comprise et d'autres avantages apparaîtront à la lecture de la description détaillée d'un mode de réalisation donné à titre d'exemple, description illustrée par le dessin joint dans lequel :
la figure 1 représente une sonde de mesure de pression totale selon l'invention ;
les figures 2 et 3 représentent des exemples de réalisation d'une sonde de mesure de pression totale.

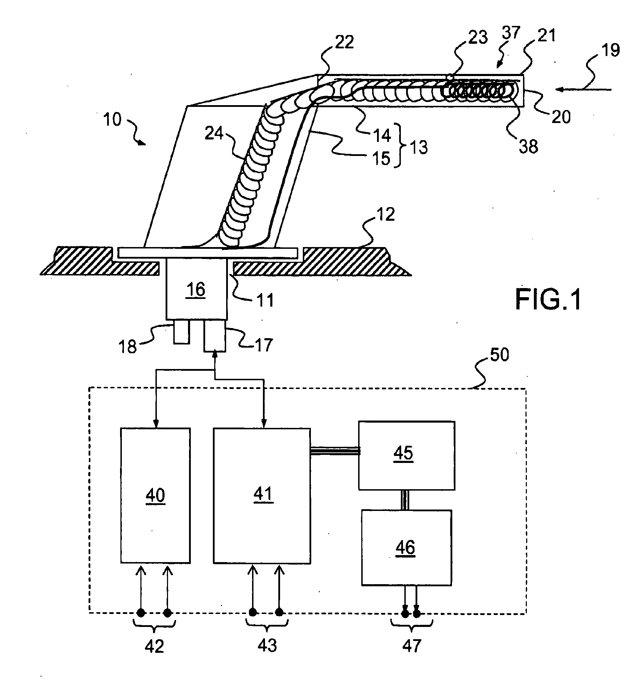

La figure 1 représente une sonde de mesure de pression totale 10 destinée à être fixée en traversée d'une ouverture 11 réalisée dans la peau 12 d'un aéronef. La sonde 10 comprend une partie externe 13 à la peau 12 et formée par un tube de Pitot 14 porté par un mat 15. La sonde 10 comprend également une partie interne 16 comportant essentiellement un connecteur électrique 17 et un connecteur pneumatique 18. Le connecteur 18 permet le raccordement pneumatique du tube de Pitot 14 à un capteur de pression situé à l'intérieur de la peau 12 de l'aéronef. La sonde 10 est positionnée sur la peau 12 de l'aéronef de telle sorte que le tube de Pitot 14 soit orienté sensiblement suivant un axe longitudinal de l'aéronef, hors couche limite, pour que la direction de l'écoulement, matérialisé par une flèche 19, fasse sensiblement face à un orifice d'entrée 20 situé à une première extrémité 21 du tube de Pitot 14.

Une seconde extrémité 22 du tube de Pitot 14, opposée à l'extrémité 21, est fermée de façon à former un point d'arrêt dans le filet d'air prélevé dans l'écoulement et pénétrant dans le tube 14 par son orifice 20. Au niveau de l'extrémité 22 du tube, un canal pneumatique non représenté sur la figure 1, s'ouvre dans le tube 14 pour y former une prise de pression au niveau de laquelle on cherche à mesurer la pression d'air. Le canal est par exemple relié à un capteur de pression ou à un autre dispositif de mesure de pression. Le capteur de pression permet de mesurer de façon effective la pression de l'air régnant à l'intérieur du tube 14 au niveau de son extrémité 22. Le capteur de pression peut appartenir à la sonde ou bien être déporté. Dans ce cas, le capteur de pression est raccordé à la sonde 10 au moyen du connecteur pneumatique 18.

A l'extrémité 22, le tube 14 comporte un ou plusieurs trous de purge 23 permettant d'évacuer des particules susceptibles de pénétrer à l'intérieur du tube 14. Hormis le ou les trous de purge 23, dont la section est faible par rapport à celle du tube 14, le tube 14 est fermé au niveau de son extrémité 22. La pression mesurée au niveau de cette extrémité représente donc la pression totale Pt de l'écoulement d'air.

Dans l'exemple représenté, le tube de Pitot 14 est fixe par rapport à la peau 12 de l'aéronef. Il est bien entendu possible de monter le tube de Pitot 14 sur un mat mobile comme par exemple une palette pouvant s'orienter dans l'axe de l'écoulement, comme par exemple décrit dans le brevet publié sous le n° FR 2 665 539 et déposé le 3 août 1990. Ainsi lorsque l'incidence locale de l'écoulement au voisinage de la sonde 10 évolue, l'orientation du tube de Pitot 14 suit cette incidence afin de toujours faire face à l'écoulement. La mesure de pression totale s'en trouve améliorée lors de variation d'incidence locale.

Le connecteur 17 permet de raccorder électriquement la sonde 10 à l'aéronef, notamment pour raccorder des moyens de réchauffage de l'ensemble de la sonde 10. Ces moyens de réchauffage comprennent par exemple une résistance chauffante 24 permettant le réchauffage du mat 15 et du tube de Pitot 14 sur toute sa longueur. La résistance chauffante 24 peut être réalisée dans un matériau dont la résistivité varie en fonction de sa température. Lors de son utilisation, on peut mesurer la valeur de la résistance 24 et ainsi déterminer une température moyenne de la sonde 10.

Selon l'invention, afin de déterminer plus précisément, la température d'une zone critique de la sonde 10, celle-ci comprend des moyens de détermination d'une température locale d'un nez 37 du tube de Pitot 14.

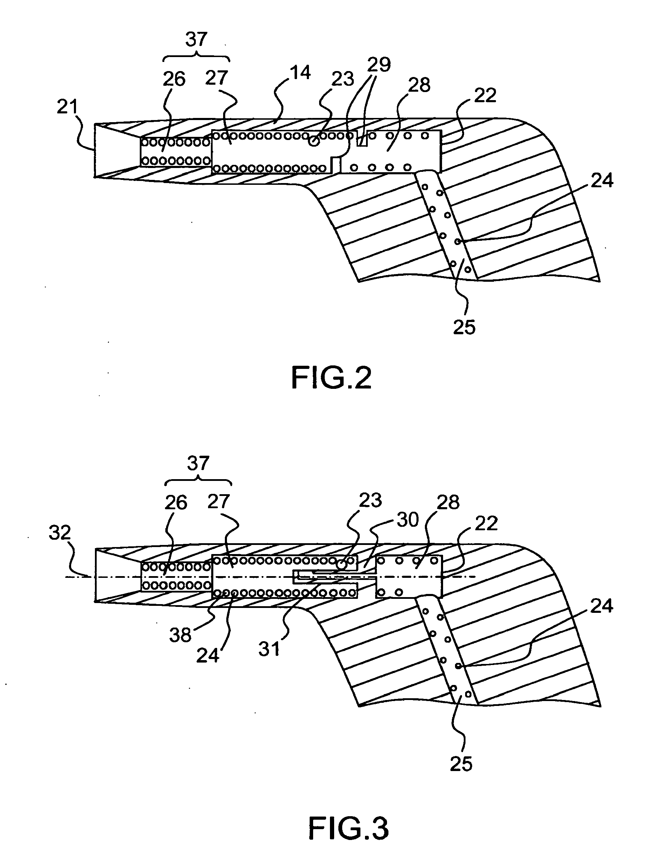

La figure 2 représente un exemple de réalisation d'une sonde de mesure de pression totale comprenant un tube de Pitot 14 dans lequel un flux d'air est destiné à pénétrer par l'extrémité 21. Au niveau de l'extrémité 22, un canal 25 forme la prise de pression de la sonde. Entre les extrémités 21 et 22, l'air pénétrant dans le tube 14 passe successivement par un canal d'entrée 26, un piège à eau 27 et une chambre de tranquillisation 28 séparée du piège à eau 27 par une chicane 29 permettant d'arrêter d'éventuelles particules pouvant pénétrer dans le tube 14 par l'extrémité 21. Ces particules sont évacuées hors du tube 14 par le trou de purge 23. La différence de pression d'air entre l'intérieur du tube 14 et l'extérieur permet aux particules présentes dans le piège à eau 27 de sortir du tube 14 par le trou de purge 23.

Il est important que les zones du tube 14 susceptibles d'accumuler des particules, notamment de l'eau, soient maintenues à une température où l'eau ne gèle pas. Dans l'exemple de réalisation de la figure 2, ces zones comprennent par exemple le canal d'entrée 26 le piège à eau 27 et forment le nez 37 du tube de Pitot 14. Ces zones peuvent également être limitées aux parois du trou de purge 23. L'invention permet de déterminer spécifiquement la température de ces zones, notamment pour déterminer si ces zones sont susceptibles de givrer.

La figure 3 représente un autre exemple de réalisation d'une sonde de mesure de pression totale comprenant un tube de Pitot 14. Dans cet exemple, on retrouve le canal d'entrée 26, le piège à eau 27 et la chambre de tranquillisation 28. Le piège à eau 27 et la chambre de tranquillisation 28 sont ici séparés par un mur 30 traversé par une tubulure 31 ouverte dans le piège à eau 27 et dans la chambre de tranquillisation 28. Pour éviter que des particules ne pénètrent dans la tubulure 31, cette dernière s'ouvre dans le piège à eau 27 perpendiculairement à un axe principal 32 du flux d'air pénétrant dans le tube 14. Le canal d'entrée 26, le piège à eau 27 et la chambre de tranquillisation 28 sont par exemple de révolution autour de l'axe 32.

Pour la suite de la description de l'invention, on décrira plus spécifiquement des moyens déterminant la température locale du nez 37. Il est bien entendu que ces moyens peuvent être localisés dans toute zone particulière du tube de Pitot 14 susceptible d'accumuler des particules véhiculées par l'écoulement, comme par exemple le trou de purge 23.

Pour déterminer la température locale du nez 37, il est possible de placer dans le nez 37 ou à proximité immédiate de celui-ci un capteur de température. Mais avantageusement, les moyens de mesure d'une température locale sont aptes à réchauffer localement le nez 37 du tube de Pitot 14. Pour ce faire, la sonde 10 peut comprendre une seconde résistance chauffante 38 dont la résistivité varie en fonction de la température. L'élément résistif est apte à être utilisé en capteur de température et en réchauffeur complémentaire des moyens de réchauffage de l'ensemble de la sonde. La résistance chauffante 38 est par exemple formée d'un câble coaxial dont l'âme est l'élément chauffant proprement dit. L'âme est isolée électriquement par exemple au moyen d'un isolant minéral qui peut être soudé dans une paroi formant le tube de Pitot 14. Le câble est enroulé dans le nez 37 et suit un cheminement plus linéaire dans le reste de la sonde 10 jusqu'au connecteur électrique 17. Dans une réalisation préférée, on utilise pour l'âme un alliage de nickel voir même du nickel pur dont la résistance varie fortement avec la température et ceci de façon relativement linéaire dans les gammes de températures d'emploi pour une sonde 10 équipant un aéronef. Les résistances chauffantes 24 et 38 peuvent être enroulées sous forme héliocoïdale et soudées sur les parois internes de la sonde 10. A l'intérieur du nez 37, on peut enrouler les deux résistances chauffantes 24 et 38 l'une dans l'autre en suivant toute les deux les parois internes du canal d'entrée 26 et du piège à eau 27.

Alternativement, l'élément résistif et les moyens de réchauffage de l'ensemble de la sonde sont formés par un seul câble bifilaire coaxial. Un premier fil du câble bifilaire forme les moyens de réchauffage de l'ensemble de la sonde et un second fil du câble forme l'élément résistif destiné à réchauffer le nez 37. Cette variante simplifie la fabrication de la sonde 10, tout en gardant le principe de séparation des moyens de réchauffage de l'ensemble de la sonde 10 et de ceux du nez 37, ce qui permet l'optimisation du réchauffage. Le second fil est réalisé de façon à ce que la valeur de sa résistance soit plus importante au niveau du nez 37 que sur le reste de son parcours dans la sonde 10 avec le premier fil.

La sonde 10 comprend des moyens de régulation électronique 40 de l'alimentation des moyens de réchauffage de l'ensemble de la sonde 10 et des moyens de régulation électronique 41 des moyens de réchauffage du nez 37. Avantageusement les moyens 40 et 41 sont séparés. Des exemples de réalisation des moyens 40 et 41 sont par exemple donnés dans les demande de brevet publiées sous les n° FR 2 726 148 et FR 2 849 339. Les moyens 40 et 41 reçoivent tous deux une alimentation électrique de l'aéronef. Avantageusement l'alimentation destinée aux moyens de réchauffage de l'ensemble de la sonde 10 et l'alimentation destinée aux moyens de réchauffage du nez 37 proviennent de circuits séparés de l'aéronef. Pour alimenter les moyens de régulation électronique 40 et 41, la sonde 10 comprend des bornes d'alimentations distinctes, respectivement 42 et 43, destinées à être connectées à des circuits d'alimentation séparées de l'aéronef. Autrement dit, les moyens de réchauffage de l'ensemble de la sonde sont alimentés au travers des bornes d'alimentation 42. Les moyens de mesure d'une température locale du nez 37 sont alimentés au travers des bornes d'alimentation 43. Les bornes 42 et 43 sont distinctes.

La sonde peut comprendre des moyens pour comparer la température délivrée par les moyens de mesure de température du nez 37 à une première température de référence T₀ et des moyens pour enclencher un réchauffage complémentaire du nez 37 du tube de Pitot 14. Sur la figure 1, ces deux moyens sont regroupés au cadre 45 avec les moyens de mesure de la température du nez 37.

La sonde peut comprendre des moyens pour générer une alarme lorsque le réchauffage complémentaire du nez 37 est enclenché. Ces moyens peuvent être également regroupés avec les autres moyens du cadre 45. Cette alarme permet d'informer le pilote que son aéronef traverse des conditions givrantes sévères.

L'invention a également pour objet un procédé selon lequel si la température délivrée par les moyens de mesure d'une température locale du nez 37 du tube de Pitot 14 est inférieure à la première température de référence T₀, alors on enclenche le réchauffage complémentaire du nez 37 jusqu'à atteindre une température délivrée au moins égale à une seconde température de référence T₁ supérieure à la première température de référence T₀. Le fait que la température de référence T₁ soit supérieure à la température de référence T₀ permet d'éviter des enclenchements et arrêts nombreux et fréquents du réchauffage du nez 37 autour de la température T₀.

Avantageusement, si après enclenchement du réchauffage complémentaire du nez 37 du tube de Pitot 14, la température délivrée par les moyens de mesure d'une température locale du nez 37 du tube de Pitot 14 reste inférieure à la température de référence T₀, alors on déclare la sonde en panne. Il est possible d'attendre une durée donnée avant de déclarer la sonde 10 en panne. A cet effet, la sonde 10 comprend un module 46 élaborant une information de validité de la sonde 10. Cette information peut prendre deux valeurs binaires, l'une tant que la sonde 10 est valide et l'autre lorsque la sonde 10 est déclarée en panne. La sonde 10 comprend des bornes 47 pour transmettre l'information de validité, vers un afficheur de l'aéronef, par exemple situé dans le cockpit de l'aéronef à disposition d'un pilote.

Les moyens de régulation électronique 40 et 41, le cadre 45 et le module 46 peuvent être regroupés sur une carte électronique 50 qui peut être disposée à l'intérieur de la partie interne 16. Les bornes 42, 43 et 47 appartiennent alors au connecteur électrique 17.

## Revendications

1. Sonde de mesure de pression totale d'un écoulement, la sonde (10) étant destinée à équiper un aéronef, la sonde (10) comprenant un tube de Pitot (14), des moyens de détermination (38) d'une température moyenne de la sonde (10) et des moyens de réchauffage (22) de l'ensemble de la sonde (10) pilotés par les moyens de détermination (38) de la température moyenne de la sonde (10), **caractérisée en ce qu'**elle comprend en outre des moyens de détermination (38) d'une température locale de zones (23, 37) du tube de Pitot (14) susceptibles d'accumuler des particules véhiculées par l'écoulement indépendamment des moyens de détermination (38) de la température moyenne de la sonde (10).

2. Sonde selon la revendication 1, **caractérisée en ce que** les zones du tube de Pitot (14) susceptibles d'accumuler des particules véhiculées par l'écoulement comprennent un nez (37) du tube de Pitot (14), le nez comprenant un canal d'entrée (26) et un piège à eau (27).

3. Sonde selon l'une des revendications précédentes, **caractérisée en ce que** les zones du tube de Pitot (14) susceptibles d'accumuler des particules véhiculées par l'écoulement comprennent des parois d'un trou de purge (23) permettant d'évacuer des particules susceptibles de pénétrer à l'intérieur du tube de Pitot (14).

4. Sonde selon l'une des revendications précédentes, **caractérisée en ce que** les moyens de détermination (38) d'une température locale sont aptes à réchauffer localement les zones (23, 37) du tube de Pitot (14) susceptibles d'accumuler des particules véhiculées par l'écoulement.

5. Sonde selon la revendication 4, **caractérisée en ce que** les moyens de mesure d'une température locale comprennent une résistance chauffante (38) dont la résistivité varie en fonction de la température, et **en ce que** la résistance chauffante (38) est apte à être utilisée en capteur de température et en réchauffeur complémentaire des moyens de réchauffage (22) de l'ensemble de la sonde (10).

6. Sonde selon la revendication 5, **caractérisée en ce que** la résistance chauffante (38) est enroulée dans les zones (23, 37) du tube de Pitot (14) susceptibles d'accumuler des particules véhiculées par l'écoulement.

7. Sonde selon la revendication 6, **caractérisée en ce que** la résistance chauffante (38) est formée par un câble coaxial dont l'âme est l'élément chauffant et **en ce que** l'âme est isolée électriquement au moyen d'un isolant minéral.

8. Sonde selon la revendication 6, **caractérisée en ce que** la résistance chauffante (38) et les moyens de réchauffage (22) de l'ensemble de la sonde (10) sont formés par un câble bifilaire coaxial, **en ce que** un premier fil du câble forme les moyens de réchauffage de l'ensemble de la sonde (10), **en ce qu'**un second fil du câble forme l'élément résistif (38) et **en ce que** le second fil est réalisé de façon à ce que la valeur de sa résistance soit plus importante au niveau des zones (23, 37) du tube de Pitot (14) susceptibles d'accumuler des particules véhiculées par l'écoulement que sur le reste de son parcours dans la sonde (10) avec le premier fil.

9. Sonde selon l'une des revendications précédentes, **caractérisée en ce que** les moyens de réchauffage (22) de l'ensemble de la sonde (10) sont alimentés au travers de premières bornes (42) d'alimentation de la sonde (10), **en ce que** les moyens de mesure (38) d'une température locale des zones (23, 37) du tube de Pitot (14) susceptibles d'accumuler des particules véhiculées par l'écoulement sont alimentés au travers de secondes bornes (43) d'alimentation de la sonde (10) et **en ce que** les premières et secondes bornes (42, 43) sont distinctes.

10. Sonde selon l'une des revendications précédentes, **caractérisée en ce qu'**elle comprend des moyens (41) pour comparer la température délivrée par les moyens de mesure (38) d'une température locale des zones (23, 37) du tube de Pitot (14) susceptibles d'accumuler des particules véhiculées par l'écoulement à une première température de référence (T₀) et des moyens (41) pour enclencher un réchauffage complémentaire des zones (23, 37) du tube de Pitot (14) susceptibles d'accumuler des particules véhiculées par l'écoulement.

11. Sonde selon la revendication 10, **caractérisée en ce qu'**elle comprend des moyens des moyens pour générer une alarme lorsque le réchauffage complémentaire est enclenché.

12. Procédé de mise en oeuvre d'une sonde (10) selon l'une quelconque des revendications 10 ou 11, **caractérisé en ce que** si la température délivrée par les moyens de mesure (38) d'une température locale des zones (23, 37) du tube de Pitot (14) susceptibles d'accumuler des particules véhiculées par l'écoulement est inférieure à la première température de référence (T₀), alors on enclenche le réchauffage complémentaire des zones (23, 37) du tube de Pitot (14) susceptibles d'accumuler des particules véhiculées par l'écoulement jusqu'à atteindre une température délivrée au moins égale à une seconde température de référence (T₁) supérieure à la première température de référence (T₀).

13. Procédé selon la revendication 12 , **caractérisé en ce que** si après enclenchement du réchauffage complémentaire des zones (23, 37) du tube de Pitot (14) susceptibles d'accumuler des particules véhiculées par l'écoulement, la température délivrée reste inférieure à la première température de référence (T₀), alors on déclare la sonde (10) en panne.

## Patentansprüche

1. Sonde zum Messen des Gesamtdrucks einer Strömung, wobei die Sonde (10) zur Installation in einem Luftfahrzeug bestimmt ist, wobei die Sonde (10) Folgendes umfasst: ein Pitot-Rohr (14), Mittel (38) zum Ermitteln einer mittleren Temperatur der Sonde (10) und Mittel zum Erhitzen (22) der gesamten Sonde (10), gesteuert durch die Mittel (38) zum Ermitteln der mittleren Temperatur der Sonde (10), **dadurch gekennzeichnet, dass** sie ferner Mittel (38) zum Ermitteln einer lokalen Temperatur von zum Sammeln von durch die Strömung mitgeführten Partikeln geeigneten Zonen (23, 37) des Pitot-Rohrs (14) unabhängig von Mitteln zum Ermitteln (38) der mittleren Temperatur der Sonde (10) umfasst.

2. Sonde nach Anspruch 1, **dadurch gekennzeichnet, dass** die zum Sammeln von durch die Strömung mitgeführten Partikeln geeigneten Zonen des Pitot-Rohrs (14) eine Nase (37) des Pitot-Rohrs (14) umfassen, wobei die Nase einen Eingangskanal (26) und eine Wasserfalle (27) umfasst.

3. Sonde nach einem der vorherigen Ansprüche, **dadurch gekennzeichnet, dass** die zum Sammeln von durch die Strömung mitgeführten Partikeln geeigneten Zonen des Pitot-Rohrs (14) Wände eines Entlüftungslochs (23) umfassen, durch das Partikel evakuiert werden können, die in das Innere des Pitot-Rohrs (14) eindringen können.

4. Sonde nach einem der vorherigen Ansprüche, **dadurch gekennzeichnet, dass** die Mittel zum Ermitteln (38) einer lokalen Temperatur die zum Sammeln von durch die Strömung mitgeführten Partikeln geeigneten Zonen (23, 37) des Pitot-Rohrs (14) lokal erhitzen können.

5. Sonde nach Anspruch 4, **dadurch gekennzeichnet, dass** die Mittel zum Messen einer lokalen Temperatur einen Heizwiderstand (38) umfassen, dessen spezifischer Widerstandswert in Abhängigkeit von der Temperatur variiert, und dadurch, dass der Heizwiderstand (38) als Temperatursensor und als komplementäre Heizung von Mitteln (22) zum Erhitzen der gesamten Sonde (10) geeignet ist.

6. Sonde nach Anspruch 5, **dadurch gekennzeichnet, dass** der Heizwiderstand (38) in den zum Sammeln von durch die Strömung mitgeführten Partikeln geeigneten Zonen (23, 37) des Pitot-Rohrs (14) aufgewickelt ist.

7. Sonde nach Anspruch 6, **dadurch gekennzeichnet, dass** der Heizwiderstand (38) von einem Koaxialkabel gebildet wird, dessen Kern das Heizelement ist, und dadurch, dass der Kern elektrisch von einem mineralischen Isolator isoliert ist.

8. Sonde nach Anspruch 6, **dadurch gekennzeichnet, dass** der Heizwiderstand (38) und die Mittel (22) zum Erhitzen der gesamten Sonde (10) von einem zweiadrigen Koaxialkabel gebildet werden, und dadurch, dass eine erste Ader des Kabels die Mittel zum Erhitzen der gesamten Sonde (10) bildet, und dadurch, dass eine zweite Ader des Kabels das Widerstandselement (38) bildet, und dadurch, dass die zweite Ader so realisiert ist, dass der Wert ihres Widerstands an den zum Sammeln von durch die Strömung mitgeführten Partikeln geeigneten Zonen (23, 37) des Pitot-Rohrs (14) höher ist als am Rest seines Verlaufs in der Sonde (10) mit der ersten Ader.

9. Sonde nach einem der vorherigen Ansprüche, **dadurch gekennzeichnet, dass** die Mittel (22) zum Erhitzen der gesamten Sonde (10) über erste Versorgungsanschlüsse (42) der Sonde (10) versorgt werden, und dadurch, dass die Mittel (38) zum Messen einer lokalen Temperatur der zum Sammeln von durch die Strömung mitgeführten Partikeln geeigneten Zonen (23, 37) des Pitot-Rohrs (14) über zweite Versorgungsanschlüsse (43) der Sonde (10) versorgt werden, und dadurch, dass der erste und der zweite Anschluss (42, 43) getrennt sind.

10. Sonde nach einem der vorherigen Ansprüche, **dadurch gekennzeichnet, dass** sie Mittel (41) zum Vergleichen der Temperatur, die von den Mitteln (38) zum Messen einer lokalen Temperatur der zum Sammeln von durch die Strömung mitgeführten Partikeln geeigneten Zonen (23, 37) des Pitot-Rohrs (14) geliefert wird, mit einer ersten Referenztemperatur (T₀) und Mittel (41) zum Auslösen einer komplementären Erhitzung der zum Sammeln von durch die Strömung mitgeführten Partikeln geeigneten Zonen (23, 37) des Pitot-Rohrs (14) umfasst.

11. Sonde nach Anspruch 10, **dadurch gekennzeichnet, dass** sie Mittel zum Erzeugen eines Alarms umfasst, wenn die komplementäre Erhitzung ausgelöst wird.

12. Verfahren zum Betreiben einer Sonde (10) nach Anspruch 10 oder 11, **dadurch gekennzeichnet, dass**, wenn die Temperatur, die von den Mitteln (38) zum Messen einer lokalen Temperatur von zum Sammeln von von der Strömung mitgeführten Partikeln geeigneten Zonen (23, 37) des Pitot-Rohrs (14) geliefert wird, niedriger ist als die erste Referenztemperatur (T₀), dann die komplementäre Erhitzung von zum Sammeln von durch die Strömung mitgeführten Partikeln geeigneten Zonen (23, 37) des Pitot-Rohrs (14) ausgelöst wird, bis eine gelieferte Temperatur erreicht wird, die wenigstens gleich einer zweiten Referenztemperatur (T₁) ist, die höher ist als die erste Referenztemperatur (T₀).

13. Verfahren nach Anspruch 12, **dadurch gekennzeichnet, dass**, wenn nach dem Auslösen der komplementären Erhitzung der zum Sammeln von durch die Strömung mitgeführten Partikeln geeigneten Zonen (23, 37) des Pitot-Rohrs (14) die gelieferte Temperatur weiterhin niedriger ist als die erste Referenztemperatur (T₀), die Sonde (10) als gestört angesehen wird.

## Claims

1. Sensor for measuring the total pressure of a flow, the sensor (10) being intended to be fitted to an aircraft, the sensor (10) comprising a Pitot tube (14), means (38) for establishing a mean temperature of the sensor (10) and means (22) for reheating the assembly of the sensor (10), which means are controlled by the means (38) for establishing the mean temperature of the sensor (10), **characterised in that** it further comprises means (38) for establishing a local temperature of zones (23, 37) of the Pitot tube (14) which are capable of accumulating particles conveyed by the flow independently of the means (38) for establishing the mean temperature of the sensor (10).

2. Sensor according to claim 1, **characterised in that** the zones of the Pitot tube (14) which are capable of accumulating particles conveyed by the flow comprise a projection (37) of the Pitot tube (14), the projection comprising an inlet channel (26) and a water trap (27).

3. Sensor according to either of the preceding claims, **characterised in that** the zones of the Pitot tube (14) which are capable of accumulating particles conveyed by the flow comprise walls of a purging hole (23) allowing particles capable of being introduced inside the Pitot tube (14) to be discharged.

4. Sensor according to any one of the preceding claims, **characterised in that** the means (38) for establishing a local temperature are suitable for locally reheating the zones (23, 37) of the Pitot tube (14) which are capable of accumulating particles conveyed by the flow.

5. Sensor according to claim 4, **characterised in that** the means for measuring a local temperature comprise a heating resistor (38) whose resistivity varies in accordance with the temperature, and **in that** the heating resistor (38) is suitable for being used as a temperature sensor and as a complementary reheater of the reheating means (22) of the assembly of the sensor (10).

6. Sensor according to claim 5, **characterised in that** the heating resistor (38) is wound in the zones (23, 37) of the Pitot tube (14) which are capable of accumulating particles conveyed by the flow.

7. Sensor according to claim 6, **characterised in that** the heating resistor (38) is formed by a coaxial cable whose core is the heating element and **in that** the core is electrically isolated by means of a mineral insulator.

8. Sensor according to claim 6, **characterised in that** the heating resistor (38) and the reheating means (22) of the assembly of the sensor (10) are formed by a coaxial two-wire cable, **in that** a first wire of the cable forms the reheating means of the assembly of the sensor (10), **in that** a second wire of the cable forms the resistive element (38), and **in that** the second wire is constructed so that the value of the resistance thereof is greater in the region of the zones (23, 37) of the Pitot tube (14) which are capable of accumulating particles conveyed by the flow than over the remainder of the course thereof in the sensor (10) with the first wire.

9. Sensor according to any one of the preceding claims, **characterised in that** the reheating means (22) of the assembly of the sensor (10) are supplied with electrical power via first supply terminals (42) of the sensor (10), **in that** the means (38) for measuring a local temperature of the zones (23, 37) of the Pitot tube (14) which are capable of accumulating particles conveyed by the flow are supplied with electrical power via second supply terminals (43) of the sensor (10) and **in that** the first and second terminals (42, 43) are separate.

10. Sensor according to any one of the preceding claims, **characterised in that** it comprises means (41) for comparing the temperature supplied by the means (38) for measuring a local temperature of the zones (23, 37) of the Pitot tube (14) which are capable of accumulating particles conveyed by the flow with a first reference temperature (T₀) and means (41) for initiating a complementary reheating of the zones (23, 37) of the Pitot tube (14) which are capable of accumulating particles conveyed by the flow.

11. Sensor according to claim 10, **characterised in that** it comprises means for generating an alarm when the complementary reheating is initiated.

12. Method for using a sensor (10) according to either claim 10 or claim 11, **characterised in that**, if the temperature supplied by the means (38) for measuring a local temperature of the zones (23, 37) of the Pitot tube (14) which are capable of accumulating particles conveyed by the flow is less than the first reference temperature (T₀), then the complementary reheating of the zones (23, 37) of the Pitot tube (14) which are capable of accumulating particles conveyed by the flow is initiated until an output temperature which is at least equal to a second reference temperature (T₁) greater than the first reference temperature (T₀) is reached.

13. Method according to claim 12, **characterised in that**, if, after the complementary reheating of the zones (23, 37) of the Pitot tube (14) which are capable of accumulating particles conveyed by the flow is initiated, the output temperature remains less than the first reference temperature (T₀), then the sensor (10) is declared to have failed.
